# EUROPEAN PATENT SPECIFICATION

(11) **EP 2 225 913 B1**
(45) Date of publication and mention of the grant of the patent: **01.08.2012**
(21) Application number: 07866827.4
(22) Date of filing: 20.12.2007
(51) Int. Cl.: H05B 33/08

(54) **MULTIFUNCTIONAL OUTPUT STAGE FOR DRIVING DIMMED LIGHT SOURCES AND RELATED METHOD**
MULTIFUNKTIONS-AUSGANGSSTUFE ZUM ANSTEUERN VON GEDIMMTEN LICHTQUELLEN UND DIESBEZÜGLICHES VERFAHREN
ETAGE DE SORTIE MULTIFONCTIONNEL DE COMMANDE DE SOURCES LUMINEUSES ATTÉNUÉES ET PROCÉDÉ ASSOCIÉ

(43) Date of publication of application: 08.09.2010
(73) Proprietor: OSRAM AG, 81543 München (DE); OSRAM S.P.A. - SOCIETA' RIUNITE OSRAM EDISON CLERICI, 20126 Milano (IT)
(72) Inventor: MENEGAZZI, Michele, I-31038 Paese (Treviso) (IT); ZANFORLIN, Nicola, I-35011 Campodarsego (Padova) (IT); DE ANNA, Paolo, I-31039 Riese Pio X (Treviso) (IT); SCHALLMOSER, Oskar, D-85521 Ottobrunnn (DE)
(74) Representative: Bosotti, Luciano
(86) International application number: PCT/IT2007/000895
(87) International publication number: WO 2009/081424

(56) References cited:
- WO-A-02/25842
- WO-A-2006/123697

## Description

### Field of the invention

The disclosure relates to output stages for driving dimmed light sources.

This disclosure was developed by paying specific attention to its possible use in driving light emitting diodes or LEDs. However, reference to this possible application is not to be construed in a limiting sense of the scope of the disclosure.

### Description of the related art

A commonly adopted technique for dimming (i.e. changing the brightness of) light sources such as LEDs lighting devices is PWM (Pulse Width Modulation) low frequency power dimming. This technique is based on the recognition that the brightness of various types of light sources (LED lighting or illumination devices being a case in point) is related to the current supplied to it; changing the current supplied to the light source is thus an effective way of adjusting the brightness thereof.

Dimming via PWM control basically involves periodically interrupting the current flow from a power supply to the light source with a variable duty cycle (i.e. the ratio of the "on" portion to the whole period of the signal). Different values of the PWM duty cycle lead to different values for the average current supplied to the light source. Another way of applying the same concept is to send towards the light source subject to dimming a constant powering signal along with a separate PWM signal which conveys the dimming information. In that case, the light source may be equipped with an electronic control module capable to "interpret" or "understand" the PWM signal and on/off switch the constant power supply to the light source to achieve the desired dimming effect.

More specifically, the invention relates to a drive arrangement according to the preamble of claim 1, which is known, e.g. from WO 2006/0123697 A1 (to which EP 1 912 354 A1 corresponds) or WO02/2584 A2.

### Object and summary of the invention

Within the context described in the foregoing, the need may exist of transmitting from the location of the power supply to the location of the light source digital information such as e.g. a digital serial frame data flow. This may be the case for e.g. light sources included in "smart" systems adapted to perform additional functions such as adjusting the relative brightness of differently coloured light sources in order to adjust the "colour temperature" of the resulting combined light.

A conventional approach to deal with that need may involve developing a dedicated output stage for each of the function considered (namely PWM dimming and digital signal transmission).

The object of the invention is to provide an improved arrangement dispensing with the need of providing such separate, dedicated output stages.

According to the present invention, that object is achieved by means of an output stage having the features set forth in the claim1 that follows.

The invention also relates to a corresponding method, as called for in claim 9.

The claims are an integral part of the disclosure provided herein.

In an embodiment, by a proper use of an open drain/collector power output stage together with a proper control of the related gate, e.g. using a microcontroller, the same hardware output stage of a driver for a light source such as a LED can be used to implement any of the following functions:
- i) PWM low frequency power dimming (brightness change) of the light source,
- ii) digital data transmission, e.g. serial frame transmission towards the light source, and
- iii) a combination of both functions i) and ii) above.

To sum up, the focus of the disclosure is on the possibility of using the same hardware device to implement PWM dimming (high current PWM pulses), serial digital transmission (digital frames) or both simultaneously.

### Brief description of the annexed drawings

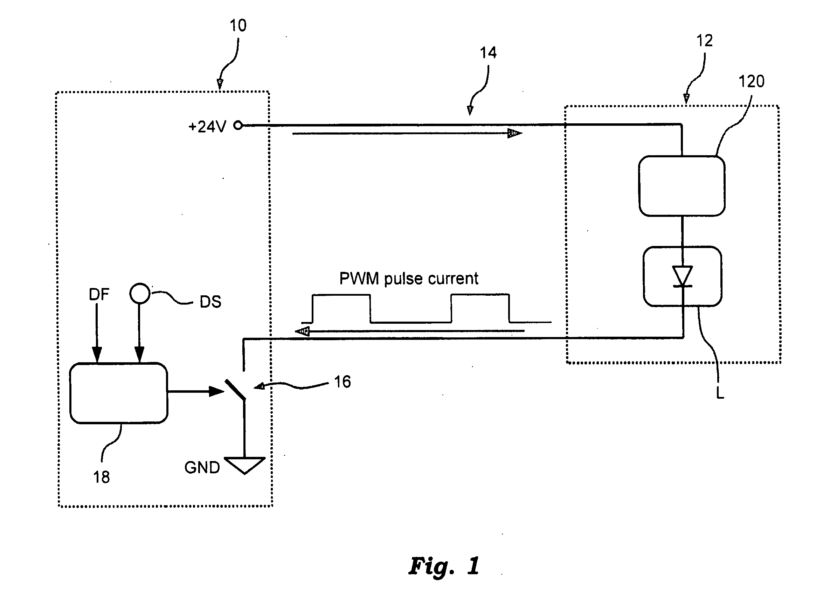

The invention will now be described, by way of example only, with reference to the annexed figures of drawing, including three figures designated figures 1, 2, and 3. These figures are exemplary of three possible conditions of use of the arrangement disclosed herein.

### Detailed description of exemplary embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

In the figures, references 10 and 12 designate the power supply side and the "load" side, respectively, of an arrangement for powering a light source such as e.g. one LED lighting module L including one or more LEDs, which may have associated current regulators 120 as needed.

As indicated, the disclosure is applicable also to any other type of light sources whose brightness is a function (e.g. proportional) of the instant current supplied thereto.

In the embodiment shown, the power supply 10 and the load 12 are connected via two-wire line 14.

In an embodiment, one of the wires of the line 14 is connected to a fixed, constant voltage level (for instance + 24 Vcc). The other wire of the line 14 is coupled to a switch 16 adapted to selectively connect the associated wire of the line 14 to ground GND to apply an on/off signal to the line 14 (for instance, connection to the ground may be construed to mean "0" value while isolation from the ground may be construed to mean "1" or vice-versa).

In an embodiment, the switch 16 may be a semiconductor switch such a mosfet or, more generally, any known type of an open drain/collector power output stage having a control gate. The switch 16 may thus act under the action of a controller 18 such as a microcontroller (comprised of a single unit or separate units).

Reference SR denotes a serial bus receiver (of any known type) sensitive to the signal on the line 14. Specifically, when the signal on the line 14 is switched between a "0" level and a "1" level receiver SR is arranged in a known manner to understand such "0" and "1" levels as a digital signal transmitted over the line 14.

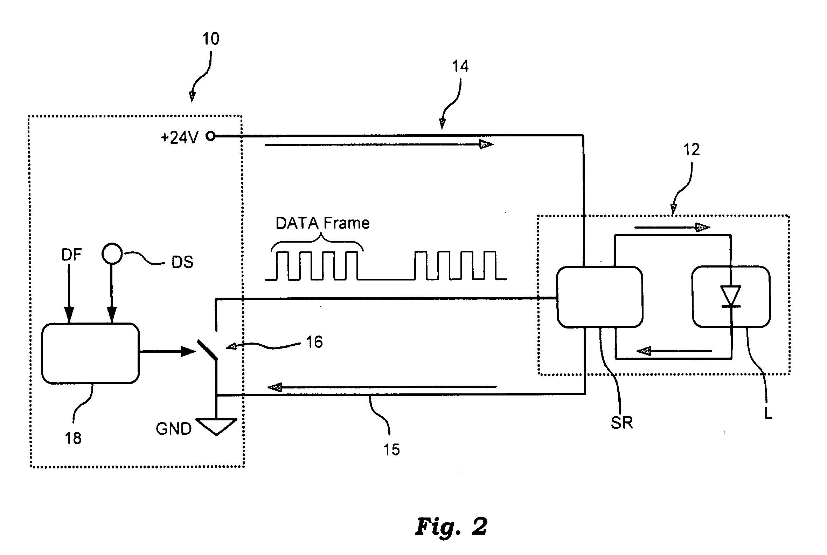

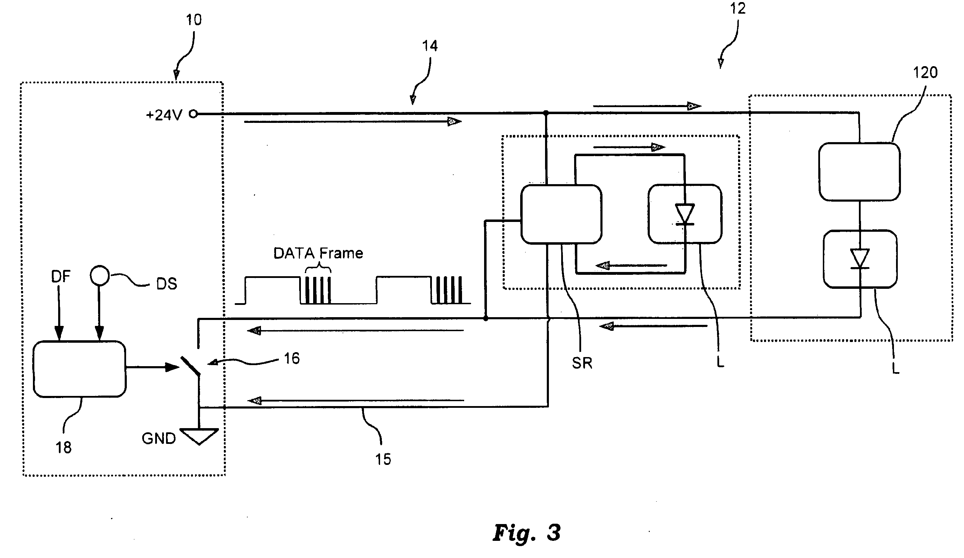

As shown in figures 2 and 3, the serial bus receiver SR may in fact be associated with a LED L and thus also act as controlled current regulator for the associated LED. In the same figures, the line 14 is shown to include, an additional return line 15, whose function will be better detailed in the following.

In the embodiments illustrated, the microcontroller 18 is sensitive to at least two input signals, namely:
- a dimming signal produced by a dimmer control DS of any known type, such as e.g. a slider manually actuatable by a user to indicate a desired degree or level of dimming for the light source L, and
- a digital signal such as e.g. data flow DF arranged in the form of digital serial frames.

When the signal is subjected to PWM modulation, that is switched between a "0" level and a "1" level with a duty cycle dictated by the power source 10, the brightness (i.e. the light intensity) produced by the source L will be a function of the average current associated with the PWM modulated signal.

As schematically shown in figure 1, when performing the dimming action, the controller 18 drives the switch 16 as a function of the dimming signal from the dimmer control DS. This results in selectively varying the duty cycle of the PWM modulated signal (PWM pulse current) sent as a high current flow over the line 14 towards the light source L. The details of performing this kind of operation are otherwise conventional and do not require a detailed description herein.

In another possible use for transmitting a digital signal (such as a data frame as shown in figure 2) the controller 18 will control switching on and off of the switch 16 in a way mirroring the digital signal DF in order to convey over the line 14 the information associated with the digital signal DF.

The digital signal conveyed over the line 14 is "read" by the receiver SR.

The digital (e.g. DATA Frame) signal sent over the line 14 may convey per se -- any -- kind of information.

In an embodiment (as illustrated in figure 2) the serial receiver SR is configured to act also as current regulator powered with constant powering signal applied between the e.g. 24V "hot" wire of the line 14 and the additional return line 15, which is connected to ground GND. In that case the digital signal sent over the line 14 may convey towards the serial receiver/current regulator SR the dimming information, that is the information identifying the level of dimming to be applied to the LED L associated to the serial receiver/current regulator SR.

The serial receiver/current regulator SR will thus represent a module capable to "interpret" or "understand" the dimming information conveyed by the digital (e.g. DATA Frame) signal sent over the line 14 an correspondingly PWM on/off switch the constant power supply to the associated LED L to achieve the desired dimming effect.

As schematically shown in figure 3, the two functions (PWM dimming and digital data transmission) described in the foregoing in connection with figures 1 and 2 can also be combined and performed simultaneously or in a substantially simultaneous manner.

In the exemplary embodiment shown, the digital signal (DATA frame) is transmitted over the line 14 during the "off" portions of the duty cycle of the PWM signal. In that way, the same structure is used both to PWM dim the light source L and to provide information over the line 14 by using the line 14 as a digital transmission line such as e.g. a serial bus.

Those of skill in the art will appreciate that in the case of combined PWM dimming digital transmission function, transmission of the digital signal (data frame) need not necessarily be limited to the "off" period of the PWM signal.

In fact, transmitting a digital signal over the line 14 amounts to transmitting power also toward the light source L. This may at least notionally affect the brightness level (i.e. the desired dimming level) of the light source L.

This effect can be easily minimized (and in fact dispensed with) by arranging the digital signals sent over the line 14 in the form of short, burst-like frames of short pulses (see e.g. figure 3), i.e. signals having a very small duty cycle, so that the power conveyed towards the light source L by the digital signal is in fact negligible and unable to alter the brightness level thereof.

Also, PWM dimming typically involves a low-frequency modulation of the signal over the line, while the digital signals sent over the line 14 will have a (much) higher repetition rate and may thus be easily filtered out before reaching the light source L.

An alternative approach may involve providing the controller 18 with a function (of a known type) adapted to detect the average current associated with the data flow DF and correspondingly adjust the PWM dimming action to take into account also the average conveyed by the digital signal transmitted over the line 14.

Without prejudice to the underlying principles of the invention, the details and embodiments may vary, even significantly, with respect to what has been described by way of example only, without departing from the scope of the invention as defined by the annexed claims.

## Claims

1. A drive arrangement for light sources (L) including a power supply (10), said power supply (10) including:
- a two-wire connection line (14) to feed at least one light source (L), wherein a hot wire of said two-wire connection line (14) is connected to a fixed, constant voltage level, and wherein the other wire of said two-wire connection line (14) is coupled to at least one switch (16) adapted to selectively connect said other wire to ground (GND) to apply on/off signals to said other wire, and
- a controller (18) to control operation of said switch (16), said controller having inputs of a dimming signal (DS) representative of a desired dimming level for said light sources (L), and an information-carrying digital signal (DF), and wherein said controller (18) is configured to control operation of said switch (16) to apply said on/off signals to said other wire by modulating a PWM on/off signal applied to said other wire as a function of said dimming signal (DS) and by transmitting said information-carrying digital signal (DF) as an on/off information signal applied to said other wire,
**characterized in that** said power supply (10) includes a return line (15) connected to ground (GND), and wherein said power supply is configured for powering:
a) light sources (L) having an associated current regulator (120) and being connected to said power supply (10) via said hot wire and said other wire, and
b) light sources (L) having associated a serial bus receiver (SR) configured to act as a controlled current regulator powered with a constant powering signal applied between said hot wire and said return line (15), wherein said serial bus receiver (SR) is arranged to receive the signal on said other wire and arranged to interpret said on/off signals and read said on/off information signal, and
wherein said controller (18) is configured to control operation of said switch (16) to:
a) modulate said PWM on/off signal applied to said other wire as a function of said dimming signal (DS) by selectively varying the duty cycle of the PWM on/off signal sent as a high current flow over said other wire towards said light sources (L), whereby the average current conveyed towards said light sources (L) and determined by said PWM on/off signal controls the brightness of said light sources (L) having said associated current regulator (120) and being connected to said power supply (10) via said hot wire and said other wire,
b) transmit said on/off information signal applied to said other wire, whereby said information-carrying digital signal (DF) transmitted as said on/off information signal conveys to said serial bus receivers (SR) dimming information identifying the level of dimming to be applied to the light source (L) associated with the respective serial bus receiver (SR).

2. The arrangement of claim 1, wherein said controller (18) is configured to control operation of said switch (16) to transmit said information-carrying digital signal (DF) as an on/off information signal applied to said other wire during the off portions of said PWM on/off signal.

3. The arrangement of claim 1 or claim 2, wherein said controller (18) is configured to control operation of said switch (16) to transmit said information-carrying digital signal (DF) as short on/off pulses applied to said other wire.

4. The arrangement of any of the previous claims, wherein said controller (18) is configured to control operation of said switch (16) to transmit said information-carrying digital signal (DF) as on/off pulses having a repetition rate higher that the modulation frequency of said PWM on/off signal.

5. The arrangement of any of the previous claims, including a light source (L) having associated a serial bus receiver (SR) coupled with said other wire to receive the signal on said other wire and interpret said on/off signal applied to said line (14) and read the information carried by said information-carrying digital signal (DF).

6. The arrangement of claim 5, wherein said serial bus receiver (SR) is coupled to a current regulator for an associated light source (L), and wherein said serial bus receiver (SR) is configured to read the information carried by said information-carrying digital signal (DF) as representative of a desired dimming level for said associated light source (L) and drive said current regulator coupled thereto to provide said desired dimming level for said associated light source (L).

7. The arrangement of any of the previous claims, wherein said light source includes at least one LED (L).

8. The arrangement of any of the previous claims, including a light source (L) having associated a current regulator (120) and being connect to said power supply (10) via said hot wire and said other wire, wherein the brightness produced by the light source (L) is a function of the average current associated with said PWM on/off signal.

9. A method of driving light sources (L) via a two-wire connection line (14) and a return line (15) connected to ground (GND), wherein a hot wire of said two-wire connection line (14) is connected to a fixed, constant voltage level, and wherein the other wire of said two-wire connection line (14) is coupled to at least one switch (16) adapted to selectively connect said other wire to ground (GND) to apply to said other wire on/off signals directed to said light sources (L), the method including the steps of:
- receiving a dimming signal (DS) representative of a desired dimming level for said light source (L) and an information-carrying digital signal (DF), and
- controlling operation of said switch (16) to apply said on/off signals to said other wire by modulating a PWM on/off signal applied to said other wire as a function of said dimming signal (DS) and by transmitting said information-carrying digital signal (DF) as an on/off information signal applied to said other wire,
**characterized in that** said light sources (L) include:
a) light sources (L) having an associated current regulator (120) and being connected to said hot wire and said other wire, and/or
b) light sources (L) having associated a serial bus receiver (SR) configured to act as a controlled current regulator powered with a constant powering signal applied between said hot wire and said return line (15), wherein said serial bus receiver (SR) is arranged to receive the signal on said other wire and arranged to interpret said on/off signals and read said on/off information signal,
the method including the steps of:
- modulating said PWM on/off signal applied to said other wire as a function of said dimming signal (DS) by selectively varying the duty cycle of the PWM on/off signal sent as a high current flow over said other wire towards said light sources (L), whereby the average current conveyed towards said light sources (L) and determined by said PWM on/off signal controls the brightness of said light sources (L) having said associated current regulator (120) and being connected to said power supply (10) via said hot wire and said other wire, and
- transmitting said on/off information signal applied to said other wire, whereby said information-carrying digital signal (DF) transmitted as said on/off information signal conveys to said serial bus receivers (SR) dimming information identifying the level of dimming to be applied to the light source (L) associated with the respective serial bus receiver (SR).

## Patentansprüche

1. Treiberanordnung für Lichtquellen (L), die eine Leistungsversorgung (10) umfasst, wobei die Leistungsversorgung (10) aufweist:
eine Zweidraht-Verbindungsleitung (14) zum Speisen der mindestens einen Lichtquelle (L), wobei ein Hitzdraht der Zweidraht-Verbindungsleitung (14) mit einem festen Konstant-Spannungspegel verbunden ist, und wobei der andere Draht der Zweitdraht-Verbindungsleitung (14) mit mindestens einem Schalter (16) gekoppelt ist, der angepasst ist, um selektiv den anderen Draht mit Masse (GND) zu verbinden, um die Ein/Aus-Signale an den anderen Draht anzulegen, und
eine Steuereinheit (18) zum Steuern einer Operation des Schalters (16), wobei die Steuereinheit, die Eingaben eines Dimm-Signals (DS) erhält, repräsentativ ist für einen gewünschten Dimm-Pegel für die Lichtquelle (L), und eines Information tragenden Digitalsignals (DF), und wobei die Steuereinheit (18) eingerichtet ist zum Steuern der Operation des Schalters (16), um die Ein/Aus-Signale an den anderen Draht anzulegen durch Modulation eines PWM Ein/Aus-Signals, das an den anderen Draht als eine Funktion des Dimm-Signals (DS) angelegt wird und durch Übertragen des Information tragenden Digitalsignals (DF) als ein Ein/Aus-Informationssignal, das an den anderen Draht angelegt wird,
**dadurch gekennzeichnet, dass**
die Leistungsversorgung (10) eine Rückleitung (15) aufweist, die mit Masse (GND) verbunden wird, und wobei die Leistungsversorgung eingerichtet ist zum Leistungsversorgen von:
a) Lichtquellen (L), die einen assoziierten Stromregler (120) aufweisen und mit der Leistungsversorgung (10) über den Hitzdraht und den anderen Draht verbunden sind, und
b) Lichtquellen (L), die assoziiert einen seriellen Bus-Receiver (SR) aufweisen, der eingerichtet ist, um als ein gesteuerter Stromregler, der mit einem konstanten
Leistungsversorgungssignal mit Leistung versorgt wird, das zwischen dem Hitzdraht und der Rückleitung (15) angelegt wird,
zu agieren, wobei der serielle Bus-Receiver (SR) angeordnet ist zum Empfangen des Signals auf dem anderen Draht, und
angeordnet ist zum Interpretieren der Ein/Aus-Signale und zum Lesen des Ein/Aus-Informationssignals, und
wobei die Steuereinheit (18) eingerichtet ist zum Steuern der Operation des Schalters (16) zum:
a) Modulieren des PWM Ein/Aus-Signals, das an den anderen Draht angelegt wird, als eine Funktion des Dimm-Signals (DS) durch selektives Variieren der Einschaltdauer des PWM Ein/Aus-Signals, das als ein Hochstromfluss über den anderen Draht zu den Lichtquellen (L) gesendet wird, wobei der Durchschnittsstrom, der zu den Lichtquellen (L) geleitet wird und durch das PWM Ein/Aus-Signal bestimmt wird, die Helligkeit der Lichtquellen (L), die den assoziierten Stromregler (120) aufweisen und die mit der Leistungsversorgung (10) verbunden sind, über den Hitzdraht und den anderen Draht steuert,
b) Übertragen des Ein/Aus-Informationssignals, das an den anderen Draht angelegt wird, wobei das Information tragende Digitalsignal (DF), das als das Ein/Aus-Informationssignal übertragen wird, an die seriellen Bus-Receiver (SR) Dimm-Information weiterleitet, die den Dimm-Pegel identifiziert, der an die Lichtquelle (L) anzulegen ist, die mit dem jeweiligen seriellen Bus-Receiver (SR) assoziiert ist.

2. Anordnung nach Anspruch 1, wobei die Steuereinheit (18) eingerichtet ist zum Steuern der Operation des Schalters (16), um das Information tragende Digitalsignal (DF) als ein Ein/Aus-Informationssignal zu übertragen, das an den anderen Draht während der Aus-Abschnitte des PWM Ein/Aus-Signals angelegt wird.

3. Anordnung nach Anspruch 1 oder Anspruch 2, wobei die Steuereinheit (18) eingerichtet ist zum Steuern der Operation des Schalters (16), um das Information tragende Digitalsignal (DF) als kurze Ein/Aus-Impulse, die an den anderen Draht angelegt werden, zu übertragen.

4. Anordnung nach irgend einem der vorhergehenden Ansprüche, wobei die Steuereinheit (18) eingerichtet ist zum Steuern der Operation des Schalters (16), um das Information tragende Digitalsignal (DF) als Ein/Aus-Impulse zu übertragen, die eine Wiederholungsrate aufweisen, die höher ist als die Modulationsfrequenz des PWM Ein/Aus-Signals.

5. Anordnung nach irgend einem der vorhergehenden Ansprüche, aufweisend eine Lichtquelle (L), mit der ein serieller Bus-Receiver (SR) assoziiert ist, der mit dem anderen Draht gekoppelt ist, um das Signal auf dem anderen Draht zu empfangen und das Ein/Aus-Signal, das an die Leitung (14) angelegt wird, zu interpretieren, und die Information zu lesen, die durch das Information tragende Digitalsignal (DF) getragen wird.

6. Anordnung nach Anspruch 5, wobei der serielle Bus-Receiver (SR) mit einem Stromregler für eine assoziierte Lichtquelle (L) gekoppelt ist, und wobei der serielle Bus-Receiver (SR) eingerichtet ist, um die Information, die durch das Information tragende Digitalsignal (DF) getragen wird, zu lesen als repräsentativ für einen gewünschten Dimm-Pegel für die assoziierte Lichtquelle (L), und den Stromregler zu treiben, der damit gekoppelt ist, um den gewünschten Dimm-Pegel für die assoziierte Lichtquelle (L) bereitzustellen.

7. Anordnung nach irgend einem der vorhergehenden Ansprüche, wobei die Lichtquelle zumindest eine LED (L) aufweist.

8. Anordnung nach irgend einem der vorhergehenden Ansprüche, aufweisend eine Lichtquelle (L) mit der ein Stromregler (120) assoziiert ist und die mit der Leistungsversorgung (10) über den Hitzdraht und den anderen Draht verbunden ist, wobei die Helligkeit, die durch die Lichtquelle (L) produziert wird, eine Funktion des mit dem PWM Ein/Aus-Signal assoziierten Durchschnittsstroms ist.

9. Verfahren zum Treiben von Lichtquellen (L) über eine Zweidraht-Verbindungsleitung (14) und eine Rückleitung (15), die mit Masse (GND) verbunden ist, wobei ein Hitzdraht der Zweidraht-Verbindungsleitung (14) mit einem festen Konstant-Spannungspegel verbunden ist, und wobei der andere Draht der Zweitdraht-Verbindungsleitung (14) mit mindestens einem Schalter (16) gekoppelt ist, der angepasst ist, um selektiv den anderen Draht mit Masse (GND) zu verbinden, um an den anderen Draht die Ein/Aus-Signale anzulegen, die auf die Lichtquellen (L) gerichtet sind,
wobei das Verfahren die Schritte aufweist:
Empfangen eines Dimm-Signals (DS), das repräsentativ ist für einen gewünschten Dimm-Pegel für die Lichtquelle (L), und eines Information tragenden Digitalsignals (DF), und
Steuern der Operation des Schalters (16), um die Ein/Aus-Signale an den anderen Draht anzulegen durch Modulation eines PWM Ein/Aus-Signals, das an den anderen Draht als eine Funktion des Dimm-Signals (DS) angelegt wird und durch Übertragen des Information tragenden Digitalsignals (DF) als ein Ein/Aus-Informationssignal, das an den anderen Draht angelegt wird,
**dadurch gekennzeichnet, dass** die Lichtquellen (L) aufweisen:
a) Lichtquellen (L), die einen assoziierten Stromregler (120) aufweisen und mit dem Hitzdraht und dem anderen Draht verbunden sind, und/oder
b) Lichtquellen (L), die assoziiert einen seriellen Bus-Receiver (SR) aufweisen, der eingerichtet ist, um als ein gesteuerter Stromregler, der mit einem konstanten
Leistungsversorgungssignal mit Leistung versorgt wird, das zwischen dem Hitzdraht und der Rückleitung (15) angelegt wird,
zu agieren, wobei der serielle Bus-Receiver (SR) angeordnet ist zum Empfangen des Signals auf dem anderen Draht, und
angeordnet ist zum Interpretieren der Ein/Aus-Signale und zum Lesen des Ein/Aus-Informationssignals,
wobei das Verfahren die Schritte aufweist:
Modulieren des PWM Ein/Aus-Signals, das an den anderen Draht angelegt wird, als eine Funktion des Dimm-Signals (DS) durch selektives Variieren der Einschaltdauer des PWM Ein/Aus-Signals, das als ein Hochstromfluss über den anderen Draht zu den Lichtquellen (L) gesendet wird, wobei der Durchschnittsstrom, der zu den Lichtquellen (L) geleitet wird und durch das PWM Ein/Aus-Signal bestimmt wird, die Helligkeit der Lichtquellen (L), die den assoziierten Stromregler (120) aufweisen und die mit der Leistungsversorgung (10) verbunden sind, über den Hitzdraht und den anderen Draht steuert, und
Übertragen des Ein/Aus-Informationssignals, das an den anderen Draht angelegt wird, wobei das Information tragende Digitalsignal (DF), das als das Ein/Aus-Informationssignal übertragen wird, an die seriellen Bus-Receiver (SR) Dimm-Information weiterleitet, die den Dimm-Pegel identifiziert, der an die Lichtquelle (L) anzulegen ist, die mit dem jeweiligen seriellen Bus-Receiver (SR) assoziiert ist.

## Revendications

1. Une configuration de pilotage pour sources lumineuses (L) comprenant une alimentation de puissance (10), ladite alimentation de puissance (10) comprenant :
- une ligne de liaison à deux fils (14) pour alimenter au moins une source lumineuse (L), un fil chaud de ladite ligne de liaison à deux fils (14) étant relié à un niveau de tension constant fixe, et l'autre fil de ladite ligne de liaison à deux fils (14) étant couplé à au moins un commutateur (16) apte à sélectivement relier ledit autre fil à la masse (GND) pour appliquer des signaux on/off audit autre fil, et
- un contrôleur (18) pour contrôler le fonctionnement dudit commutateur (16), ledit contrôleur comportant des entrées d'un signal d'atténuation (DS) représentatif d'un niveau d'atténuation souhaité pour lesdites sources lumineuses (L), et un signal numérique porteur d'information (DF), et ledit contrôleur (18) étant configuré pour contrôler le fonctionnement dudit commutateur (16) pour appliquer lesdits signaux on/off audit autre fil par modulation d'un signal on/off PWM appliqué audit autre fil en fonction dudit signal d'atténuation (DS) et par transmission dudit signal numérique porteur d'information (DF) en tant que signal d'information on/off appliqué audit autre fil,
**caractérisée en ce que** ladite alimentation de puissance (10) comprend une ligne de retour (15) reliée à la masse (GND), et ladite alimentation de puissance étant configurée pour alimenter :
a) des sources lumineuses (L) auxquelles est associé un régulateur de courant (120) et qui sont reliées à ladite alimentation de puissance (10) via ledit fil chaud et ledit autre fil, et
b) des sources lumineuses (L) auxquelles est associé un récepteur de bus série (SR) configuré pour opérer en régulateur de courant contrôlé alimenté par un signal d'alimentation constant appliqué entre ledit fil chaud et ladite ligne de retour (15), ledit récepteur de bus série (SR) étant configuré pour recevoir le signal sur ledit autre fil et configuré pour interpréter lesdits signaux on/off et lire ledit signal d'information on/off, et
dans laquelle ledit contrôleur (18) est configuré pour contrôler le fonctionnement dudit commutateur (16) afin de :
a) moduler ledit signal on/off PWM appliqué audit autre fil en fonction dudit signal d'atténuation (DS) par variation sélective du rapport cyclique du signal on/off PWM envoyé comme débit élevé de courant sur ledit autre fil en direction desdites sources lumineuses (L), de sorte que le courant moyen envoyé vers lesdites sources lumineuses (L) et qui est déterminé par ledit signal on/off PWM contrôle la luminosité desdites sources lumineuses (L) auxquelles est associé le régulateur de courant (120) et qui sont reliées à ladite alimentation de puissance (10) via ledit fil chaud et ledit autre fil,
b) transmettre ledit signal d'information on/off appliqué audit autre fil, de sorte que ledit signal numérique porteur d'information (DF) transmis en tant que ledit signal d'information on/off transfère auxdits récepteurs de bus série (SR) une information d'atténuation identifiant le niveau d'atténuation devant être appliqué à la source lumineuse (L) à laquelle est associé le récepteur de bus série respectif (SR).

2. La configuration de la revendication 1, dans laquelle ledit contrôleur (18) est configuré pour contrôler le fonctionnement dudit commutateur (16) pour transmettre ledit signal numérique porteur d'information (DF) en tant que signal d'information on/off appliqué audit autre fil durant les parties off dudit signal on/off PWM.

3. La configuration de la revendication 1 ou de la revendication 2, dans laquelle ledit contrôleur (18) est configuré pour contrôler le fonctionnement dudit commutateur (16) pour transmettre ledit signal numérique porteur d'information (DF) sous forme de brèves impulsions on/off appliquées audit autre fil.

4. La configuration de l'une des revendications précédentes, dans laquelle ledit contrôleur (18) est configuré pour contrôler le fonctionnement dudit commutateur (16) pour transmettre ledit signal numérique porteur d'information (DF) en tant qu'impulsions on/off présentant une cadence de répétition supérieure à la fréquence de modulation dudit signal on/off PWM.

5. La configuration de l'une des revendications précédentes, comprenant une source lumineuse (L) à laquelle est associé un récepteur de bus série (SR) couplé audit autre fil pour recevoir le signal sur ledit autre fil et interpréter ledit signal on/off appliqué à ladite ligne (14) et lire l'information véhiculée par ledit signal numérique porteur d'information (DF).

6. La configuration de la revendication 5, dans laquelle ledit récepteur de bus série (SR) est couplé à un régulateur de courant pour une source lumineuse associée (L), et dans laquelle ledit récepteur de bus série (SR) est configuré pour lire l'information véhiculée par ledit signal numérique porteur d'information (DF) comme étant représentative d'un niveau d'atténuation souhaité pour ladite source lumineuse associée (L) et piloter ledit régulateur de courant couplé à celle-ci pour obtenir ledit niveau d'atténuation souhaité pour ladite source de lumière associée (L).

7. La configuration de l'une des revendications précédentes, dans laquelle ladite source lumineuse comprend au moins une LED (L).

8. La configuration de l'une des revendications précédentes, comprenant une source lumineuse (L) à laquelle est associé un régulateur de courant (120) et qui est reliée à ladite alimentation de puissance (10) via ledit fil chaud et ledit autre fil, la luminosité produite par la source lumineuse (L) étant une fonction du courant moyen associé audit signal on/off PWM.

9. Un procédé de pilotage de source lumineuse (L) via une ligne de liaison à deux fils (14) et une ligne de retour (15) reliée à la masse (GND), dans lequel un fil chaud de ladite ligne de liaison à deux fils (14) est relié à un niveau de tension constant fixe, et dans lequel l'autre fil de ladite ligne de liaison à deux fils (14) est couplé à au moins un commutateur (16) apte à sélectivement connecter ledit autre fil à la masse (GND) pour appliquer audit autre fil des signaux on/off en direction desdites autres sources lumineuses (L), le procédé comprenant les étapes suivantes :
- réception d'un signal d'atténuation (DS) représentatif d'un niveau d'atténuation souhaité pour ladite source lumineuse (L) et d'un signal numérique porteur d'information (DF), et
- contrôle du fonctionnement dudit commutateur (16) pour appliquer lesdits signaux on/off audit autre fil par modulation d'un signal on/off PWM appliqué audit autre fil en fonction dudit signal d'atténuation (DS) et par transmission dudit signal numérique porteur d'information (DF) en tant que signal d'information on/off appliqué audit autre fil,
**caractérisé en ce que** lesdites sources lumineuses (L) comprennent :
a) des sources lumineuses (L) auxquelles est associé un régulateur de courant (120) et qui sont connectées audit fil chaud et audit autre fil, et/ou
b) des sources lumineuses (L) auxquelles est associé un récepteur de bus série (SR) configuré pour opérer en tant que régulateur de courant contrôlé alimenté par un signal d'alimentation constant appliqué entre ledit fil chaud et ladite ligne de retour (15), ledit récepteur de bus série (SR) étant configuré pour recevoir le signal sur ledit autre fil et configuré pour interpréter lesdits signaux on/off et lire ledit signal d'information on/off,
le procédé comprenant les étapes de :
- modulation dudit signal on/off PWM appliqué audit autre fil en fonction dudit signal d'atténuation (DS) par variation sélective du rapport cyclique du signal on/off PWM envoyé comme débit élevé de courant sur ledit autre fil en direction desdites sources lumineuses (L), de sorte que le courant moyen qui passe en direction desdites sources lumineuses (L) et qui est déterminé par ledit signal on/off PWM contrôle la luminosité desdites sources lumineuses (L) auxquelles est associé ledit régulateur de courant (120) et qui sont reliées à ladite alimentation de puissance (10) via ledit fil chaud et ledit autre fil, et
- transmission dudit signal d'information on/off appliqué audit autre fil, de sorte que ledit signal numérique porteur d'information (DF) transmis en tant que ledit signal d'information on/off transfère auxdits récepteurs de bus série (SR) une information d'atténuation identifiant le niveau d'atténuation à appliquer à la source lumineuse (L) à laquelle est associé le récepteur de bus série respectif (SR).
